# FASCICULE DE BREVET EUROPEEN

(11) **EP 0 664 241 B1**
(45) Date de publication et mention de la délivrance du brevet: **10.06.1998**
(21) Numéro de dépôt: 95400099.8
(22) Date de dépôt: 18.01.1995
(51) Int. Cl.: B60R 9/045, B60R 9/052, B60R 9/058

(54) **Dispositif formant porte-bagages de toit de véhicule automobile**
Vorrichtung, die einen Dachgepäckträger eines Kraftfahrzeuges bildet
Device forming a roof rack of an automotive vehicle

(30) Priorité: 26.01.1994 FR 9400866
(43) Date de publication de la demande: 26.07.1995
(73) Titulaire: AUTOMOBILES PEUGEOT, 75116 Paris (FR); AUTOMOBILES CITROEN, 92200 Neuilly-sur-Seine (FR)
(72) Inventeur: Depoix, Jean-Claude, F-94360 Bry sur Marne (FR)
(74) Mandataire: Thinat, Michel

(56) Documents cités:
- WO-A-92/02386
- DE-U- 8 804 994
- US-A- 4 323 182

## Description

La présente invention concerne un dispositif formant porte-bagages de toit de véhicule automobile.

On connaît un tel dispositif comprenant en général deux barres transversales reliées à leurs extrémités à des supports disposés respectivement dans deux plans sensiblement verticaux et fixés par leurs bases au toit du véhicule au moyen de vis à têtes coulissant dans deux rails solidaires du toit du véhicule.

Cependant, ce dispositif connu nécessite un outillage spécial pour le montage et/ou le démontage des barres du porte-bagages et les moyens de fixation des supports des barres aux rails sont visibles. De plus, ce dispositif connu ne peut être monté que sur des rails parallèles.

WO-A-92 02 386 décrit un dispositif formant porte-bagages de toit de véhicule automobile comprenant les caractéristiques techniques énoncées dans le préambule de la revendication 1. Chaque barre transversale est munie à ses deux extrémités respectivement de deux embouts solidaires de celles-ci et comportant chacun une rainure permettant de fixer l'extrémité de l'embout dans le support correspondant par un axe porté par le support et traversant la rainure, de façon à permettre un pivotement limité de la barre dans un plan horizontal lorsqu'on règle la position du support le long du rail correspondant alors que l'autre support est fixé à l'autre rail.

Ce dispositif connu, relativement complexe, n'est pas adapté pour permettre l'utilisation des barres transversales lorsque les deux rails du toit ne sont pas parallèles, mais convergent, par exemple.

La présente invention propose un dispositif formant porte-bagages de toit de véhicule automobile éliminant les inconvénients ci-dessus des dispositif connus.

A cet effet, le dispositif formant porte-bagages de toit de véhicule automobile conforme à l'invention comprend les caractéristiques techniques de la partie caractérisante de la revendication 1.

De préférence, les moyens d'articulation comprennent, à chaque extrémité de la barre transversale, un embout se terminant par un tenon pouvant tourillonner, autour d'un axe fixe vertical, dans une mortaise réalisée à la partie supérieure du support.

Avantageusement, les moyens de réglage de la longueur de la barre transversale comprennent, à chaque extrémité de la barre qui est creuse, un tampon fixé, par exemple par soudage, dans la barre et un ressort interposé entre le tampon et une extrémité opposée au tenon de l'embout précité monté coulissant dans la barre transversale.

Le mécanisme à vis comprend, associés à chaque support, une vis à talon coulissant dans le rail correspondant du toit et un écrou en forme de molette logé dans une mortaise sensiblement horizontale réalisée à la base du support, la vis à talon traversant un perçage réalisé dans le support de part et d'autre de la mortaise de façon à permettre le blocage par l'écrou en forme de molette du talon de la vis dans le rail correspondant.

La mortaise servant au logement de l'écrou en forme de molette débouche vers l'axe longitudinal du toit de façon à être invisible pour un observateur situé à côté du véhicule.

L'écrou en forme de molette fait saillie du support correspondant vers l'axe longitudinal du toit et est invisible pour un observateur situé à côté du véhicule.

Chaque écrou en forme de molette comprend des trous borgnes radiaux permettant l'introduction d'un outil de manoeuvre en forme de tige.

Le dispositif comprend également un cache en matière plastique fixé au support correspondant de manière à occulter la mortaise et l'écrou en forme de molette précités du côté de l'axe longitudinal du toit.

Le dispositif comprend de plus un manchon souple de protection des moyens d'articulation fixé sur l'extrémité correspondante de la barre transversale et la partie supérieure du support.

Les deux rails sont fixés sur le toit du véhicule par des vis et des écrous fixés au toit, de préférence par soudage.

Des profilés en matière plastique sont prévus interposés entre les rails et le toit du véhicule.

Avantageusement, les supports de chaque barre transversale sont en forme de crosse.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
La figure 1 est une vue de dessus du dispositif formant porte-bagages de l'invention.
La figure 2 est une vue en perspective agrandie d'une extrémité d'un rail suivant la flèche II de la figure 1.
La figure 3 est une vue en coupe suivant la ligne III-III de la figure 1.
La figure 4 est une vue de dessus suivant la flèche IV de la figure 3 avec arrachement partiel.
La figure 5 est une vue en coupe agrandie détaillée de la partie cerclée en V de la figure 3.

Le dispositif formant porte-bagages de toit de véhicule automobile tel que représenté aux figures comprend deux barres transversales 1, chacune reliée à ses deux extrémités respectivement à deux supports 2 disposés dans un plan sensiblement vertical, c'est-à-dire perpendiculaire au plan du toit 3 du véhicule. Les supports 2 sont fixés par leurs bases 2a au toit 3 du véhicule au moyen d'un mécanisme à vis 4 permettant le coulissement de deux supports 2 d'une barre transversale respectivement dans deux rails 5 portés par le toit 3 afin de régler les positions relatives des deux barres transversales 1 avant leur fixation aux deux rails 5.

Selon l'invention, chaque barre transversale 1 est montée articulée dans un plan horizontal sur les deux supports 2 par des moyens d'articulation et comprend des moyens lui permettant d'avoir une longueur variable.

Les moyens d'articulation comprennent, à chaque extrémité de la barre transversale 1, un embout 6 pouvant coulisser dans la barre creuse 1 et se terminant par un tenon 7 pouvant tourillonner, autour d'un axe fixe vertical 8, dans une mortaise 9 réalisée à la partie supérieure 2b du support 2. L'extrémité du tenon 7 et le fond de la mortaise 9 sont en arc de cercle de même rayon de courbure et l'entrée de la mortaise est évasée pour permettre la rotation de la barre transversale 1 autour de l'axe 8 qui traverse le tenon 7 et la mortaise 9 et est fixé à cette dernière par ses deux extrémités.

Les moyens permettant le réglage de la longueur de chaque barre transversale 1 comprennent, à chaque extrémité creuse de la barre 1, un tampon 10 fixé dans la barre, par exemple par soudage, et un ressort hélicoïdal 11 interposé entre le tampon 10 et l'extrémité de l'embout 6 opposée au tenon 7. Le ressort 11, en plus de permettre un déplacement de l'embout 6 dans une direction sensiblement perpendiculaire à l'axe X-X' du toit 3, permet également un rattrapage de jeux, la même barre transversale 1 pouvant être utilisée à l'avant ou à l'arrière du véhicule.

Pour protéger les moyens d'articulation de chaque barre 1 au support 2, on prévoit, à chaque extrémité de la barre 1, un manchon souple de protection 12 centré sur l'extrémité de la barre 1 et sur la partie supérieure 2b du support 2 en forme de crosse de façon que la partie supérieure 2b soit sensiblement en alignement avec la barre 1 en position assemblée.

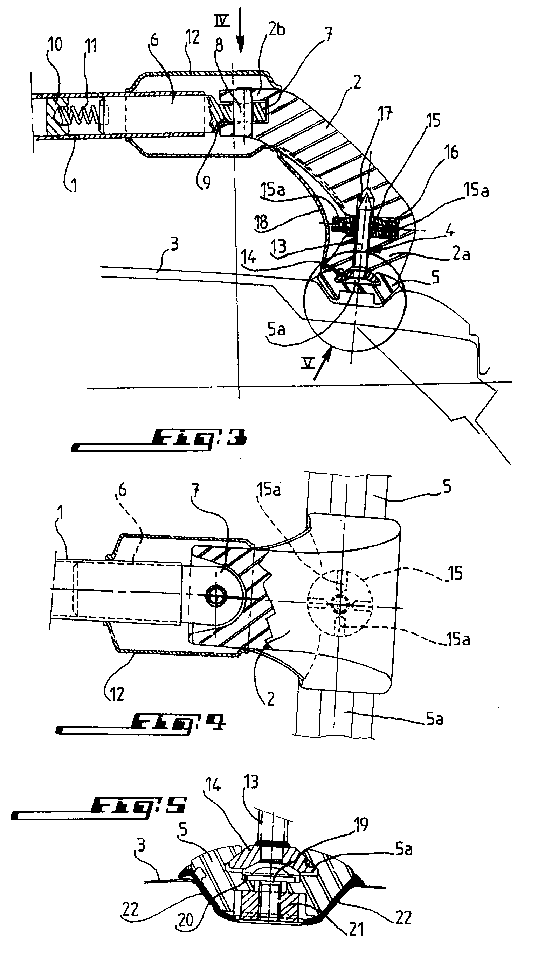

Le mécanisme à vis 4 permettant le coulissement de chaque support 2 dans le rail correspondant 5 et la fixation de ce support au rail comprend une vis 13 à talon ou tête 14 en forme de queue d'aronde pouvant coulisser dans une rainure de forme conjuguée 5a du rail correspondant 5 et un écrou en forme de molette 15 logé dans une mortaise 16 réalisée à la base 2a du support 2 en étant sensiblement parallèle au plan du toit 3 du véhicule. La mortaise 16 débouche vers l'axe longitudinal X-X' du toit 3 de façon à être invisible à un observateur situé à côté du véhicule et l'écrou en forme de molette 15 est logé dans la mortaise 16 de façon à faire saillie de la base 2a du support 2 vers l'axe longitudinal du toit 3 pour être invisible à ce même observateur. La vis 13 traverse un trou borgne 17 réalisé dans la base 2a du support 2 de part et d'autre de la mortaise 16 pour permettre le passage par vissage de la vis 13 à travers l'écrou en forme de molette 15. En tournant l'écrou en forme de molette 15 dans le sens des aiguilles d'une montre en considérant la figure 4, le talon 14 de la vis 13 est appliqué à force contre la surface supérieure de retenue de la rainure en queue d'aronde 5a du rail 5, bloquant ainsi la base 2a du support 2 sur le rail 5. Chaque écrou en forme de molette 15 peut comporter un certain nombre de trous borgnes radiaux 15a permettant l'introduction d'un outil de manoeuvre en forme de tige pour réaliser un blocage du support 2 plus énergique que celui effectué uniquement manuellement directement sur l'écrou 15. Un cache en matière plastique 18 est fixé à chaque support 2 de manière à occulter l'écrou en forme de molette 15 et la mortaise 16 du côté de l'axe longitudinal X-X' du toit 3.

Chaque rail 5 est fixé sur le toit 3 par des ensembles à vis 19, dont les têtes sont logées respectivement dans des lamages 20 usinés au fond de la rainure en queue d'aronde 5a, et écrous 21 fixés au toit 3, de préférence par soudage. Des profilés en matière plastique 22 sont interposés entre les deux rails 5 et le toit 3 du véhicule. Les extrémités de chaque rail 5 sont chacune munie d'un cache en matière plastique 23 fixé amoviblement, par encliquetage, au rail 5 de façon à pouvoir être retiré pour l'introduction des talons 14 des vis de fixation 13 dans la rainure 5a du rail 5.

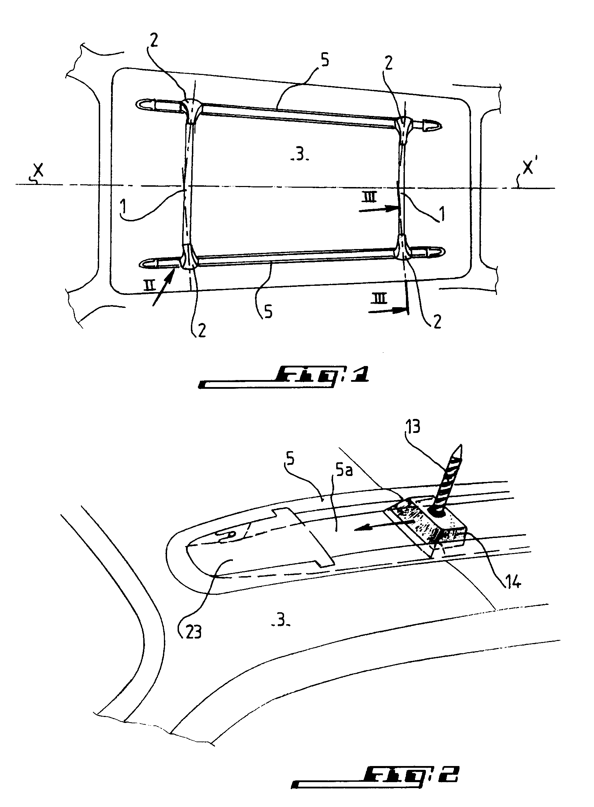

Comme cela ressort de la description qui précède, le dispositif conforme à l'invention permet la réalisation d'un porte-bagages de toit de véhicule esthétique, ne nécessitant pas d'outillage spécial pour le montage et surtout autorisant l'utilisation de rails légèrement convergents, comme cela est représenté en figure 1.

## Revendications

1. Dispositif formant porte-bagages de toit de véhicule automobile, comprenant au moins une barre transversale (1) reliée à deux supports (2) disposés dans un plan sensiblement vertical et fixés par leurs bases au toit (3) du véhicule au moyen d'un mécanisme à vis (4) permettant le coulissement des deux supports (2) respectivement dans deux rails (5) portés par le toit (3), la barre transversale (1) étant montée articulée dans un plan horizontal sur les deux supports (2) par des moyens d'articulation (6, 7, 8, 9), caractérisé en ce que la barre transversale (1) comprend des moyens (6, 10, 11) lui permettant d'avoir une longueur variable.

2. Dispositif selon la revendication 1, caractérisé en ce que les moyens d'articulation précités comprennent, à chaque extrémité de la barre transversale (1), un embout (6) se terminant par un tenon (7) pouvant tourillonner, autour d'un axe fixe vertical (8), dans une mortaise (9) réalisée à la partie supérieure (2b) du support (2).

3. Dispositif selon les revendications 1 et 2, caractérisé en ce que les moyens de réglage de la longueur de la barre transversale (1) comprennent, à chaque extrémité de la barre (1) qui est creuse, un tampon (10) fixé, par exemple par soudage, dans la barre (1) et un ressort (11) interposé entre le tampon (10) et une extrémité opposée au tenon (7) de l'embout (6) monté coulissante dans la barre transversale (1).

4. Dispositif selon l'une des revendications précédentes, caractérisé en ce que le mécanisme à vis (4) précité comprend, associés à chaque support (2), une vis (13) à talon (14) coulissant dans le rail correspondant (5) du toit (3) et un écrou en forme de molette (15) logé dans une mortaise sensiblement horizontale (16) réalisée à la base (2a) du support (2), la vis à talon (13) traversant un perçage (17) réalisé dans le support (2) de part et d'autre de la mortaise (16) de façon à permettre le blocage par l'écrou en forme de molette (15) du talon (14) de la vis (13) dans le rail correspondant (5).

5. Dispositif selon la revendication 4, caractérisé en ce que la mortaise (16) débouche vers l'axe longitudinal (X-X') du toit (3) de façon à être invisible à un observateur situé à côté du véhicule.

6. Dispositif selon la revendication 4 ou 5, caractérisé en ce que l'écrou en forme de molette (15) fait saillie du support (2) vers l'axe longitudinal (X-X') du toit (3) et est invisible à un observateur situé à côté du véhicule.

7. Dispositif selon l'une des revendications 4 à 6, caractérisé en ce que chaque écrou en forme de molette (15) comprend des trous borgnes radiaux (15a) permettant l'introduction d'un outil de manoeuvre en forme de tige.

8. Dispositif selon l'une des revendications 4 à 7, caractérisé en ce qu'il comprend un cache en matière plastique (18) fixé au support correspondant (2) de manière à occulter la mortaise (16) et l'écrou en forme de molette (15) précité du côté de l'axe longitudinal (X-X') du toit (3).

9. Dispositif selon l'une des revendications précédentes, caractérisé en ce qu'il comprend un manchon souple (12) de protection des moyens d'articulation fixé sur l'extrémité correspondante de la barre transversale (1) et la partie supérieure (2b) du support (2).

10. Dispositif selon l'une des revendications précédentes, caractérisé en ce que les deux rails précités (5) sont fixés sur le toit (3) par des vis (19) et des écrous (21) fixés au toit (3), de préférence par soudage.

11. Dispositif selon l'une des revendications précédentes, caractérisé en ce que des profilés en matière plastique (22) sont interposés entre les rails (5) et le toit (3).

12. Dispositif selon l'une des revendications 1 à 11, caractérisé en ce que les supports (2) sont en forme de crosse.

## Claims

1. Device forming a luggage rack on an automotive vehicle roof comprising at least one crossbar (1) connected to two supports (2) arranged in a substantially vertical plane and fastened with their bases onto the roof (3) of the vehicle by means of a screw mechanism (4) permitting the sliding of both supports (2) in two rails (5), respectively, carried by the roof (3), the crossbar being pivotally mounted in a horizontal plane onto both supports (2) with pivotal connection means (6, 7, 8, 9), characterized in that the crossbar (1) comprises means (6, 10, 11) permitting it to have a variable length.

2. Device according to claim 1, characterized in that the aforesaid pivotal connection means comprise at each end of the crossbar (1) an end part (6) terminating into a plug (7) which may swivel about a stationary vertical pin (8) within a slot (9) formed at the upper portion (2b) of the support (2).

3. Device according to claims 1 and 2, characterized in that the means for the adjustment of the length of the crossbar (1) comprise at each end of the bar (1) which is hollow, a plug (10) fastened for example by welding within the bar (1) and a spring (11) interposed between the plug (10) and one opposite end of the lug (7) of the end part (6) slidably mounted in the crossbar (1).

4. Device according to one of the foregoing claims, characterized in that the aforesaid screw mechanism (4) comprises, associated with each support (2), a screw (13) with a heel (14) sliding in the corresponding rail (5) of the roof (3) and a knurled nut (15) accommodated in a substantially horizontal slot (16) formed at the base (2a) of the support, the heeled screw (13) extending through a bore (17) formed in the support (2) on either side of the slot (16) so as to allow the blocking, with the knurled nut (15), of the heel (14) of the screw (13) in the corresponding rail (5).

5. Device according to claim 4, characterized by that of the slot (16) opens towards the longitudinal axis (X-X') of the roof (3) so as to be invisible to an observer located at the side of the vehicle.

6. Device according to claim 4 or 5, characterized in that the knurled nut (15) projects from the support (2) towards the longitudinal axis (X-X') of the roof (3) and is invisble to an observer located at the side of the vehicle.

7. Device according to one of claims 4 to 6, characterized in that each knurled nut (15) comprises three radial blind holes (15a) permitting the insertion of a rod-shaped operating tool.

8. Device according to one of claims 4 to 7, characterized in that it comprises a cover of plastics material (18) fastened to the corresponding support (2) so as to hide the slot (16) and the aforesaid knurled nut (15) towards the longitudinal axis (X-X') of the roof (3).

9. Device according to one of the foregoing claims, characterized in that it comprises a flexible sleeve (12) for the protection of the connection means, secured onto the corresponding end of the crossbar (1) and the upper portion (2b) of the support (2).

10. Device according to one of the foregoing claims, characterized in that both aforesaid rails (5) are fastened onto the roof (3) with screws (19) and nuts (21) fastened preferably by welding onto the roof (3).

11. Device according to one of the foregoing claims, characterized in that sectional members of plastics material (22) are interposed between the rails (5) and the roof (3).

12. Device according to one of claims 1 to 11, characterized in that the supports (2) are crook-shaped.

## Patentansprüche

1. Einen Kraftfahrzeugdachgepäckträger bildende Vorrichtung mit wenigstens einem Querstab (1), der mit zwei in einer etwa senkrechten Ebene angeordneten Halterungen (2) verbunden ist, die mit ihren Unterteilen am Dach (3) des Fahrzeuges mittels einem das Gleiten der beiden Halterungen (2) jeweils in zwei durch das Dach (3) getragenen Schienen (5) gestattenden Schraubenmechanismus (4) befestigt sind, wobei der Querstab (1) in einer waagerechten Ebene an den beiden Halterungen (2) mit Anlenkungsmitteln (6,7,8,9) gelenkig angeordnet ist, dadurch gekennzeichnet, dass der Querstab (1) Mittel (6,10,11) umfasst, die ihm gestatten, eine veränderliche Länge zu haben.

2. Vorrichtung nach Anspruch 1, dadurch gekennzeichnet, dass die vorgenannten Anlenkungsmittel an jedem Ende des Querstabes (1) ein in einen Zapfen (7) auslaufendes Ansatzstück (6) umfassen, der um einen senkrechten ortsfesten Stift (8) herum in einem in dem oberen Teil (2b) der Halterung (2) gebildeten Schlitz (9) drehbar ist.

3. Vorrichtung nach den Ansprüchen 1 und 2, dadurch gekennzeichnet, dass die Mittel zur Einstellung der Länge des Querstabes (1) an jedem Ende des Querstabes (1), der hohl ist, einen zum Beispiel durch Schweissen in dem Stab (1) befestigten Stopfen (10) und eine zwischen dem Stopfen (10) und einem entgegengesetzten Ende des Zapfens (7) des in dem Querstab (1) gleitend angeordneten Ansatzstückes gefügte Feder (11) umfassen.

4. Vorrichtung nach einem der vorangehenden Ansprüche dadurch gekennzeichnet dass der vorgenannte Schraubenmechanismus (4) im jeder Halterung (2) zugeordneten Zusammenhang, eine in der entsprechenden Schiene (5) des Daches (3) gleitende Schraube (13) mit Absatz (14) und eine in einem am Unterteil (2a) der Halterung (2) gebildeten etwa waagerechten Schlitz (16) untergebrachte Rändelmutter (15) aufweist, wobei die Schraube mit Absatz (13) eine in der Halterung (2) beiderseits des Schlitzes (16) gebildete Bohrung (17) durchsetzt, um das Festhalten des Absatzes (14) der Schraube (13) in der entsprechenden Schiene (5) durch die Rändelmutter (15) zu gestatten.

5. Vorrichtung nach Anspruch 4, dadurch gekennzeichnet, dass der Schlitz (16) zur Längsachse (X-X') hin des Daches (3) ausmündet, um für einen neben dem Fahrzeug gelegenen Beobachter unsichtbar zu sein.

6. Vorrichtung nach Anspruch 4 oder 5, dadurch gekennzeichnet, dass die Rändelmutter (15) von der Halterung (2) zur Längsachse (X-X') hin des Daches (3) vorspringt und für einen an der Seite des Fahrzeuges gelegenen Beobachter unsichtbar ist.

7. Vorrichtung noch einem der Ansprüche 4 bis 6, dadurch gekennzeichnet, dass jede Rändelmutter (15) die Einführung eines stab-förmigen Betätigungswerkzeuges gestattende radiale Sacklöcher (15a) aufweist.

8. Vorrichtung nach einem der Ansprüche 4 bis 7, dadurch gekennzeichnet, dass sie eine an der entsprechenden Halterung (2) befestigte Sichtabdeckung aus Kunststoff (18) aufweist, um den Schlitz (16) und die vorgenannte Rändelmutter (15) zur Längsachse (X-X') des Daches (3) hin zu verdecken.

9. Vorrichtung nach einem der vorangehenden Ansprüche, dadurch gekennzeichnet, dass sie eine an dem entsprechenden Ende des Querstabes (1) und an dem oberen Teil (2b) der Halterung (2) befestigte nachgiebige Muffe (12) zum Schutz der Anlenkerungsmittel aufweist.

10. Vorrichtung nach einem der vorangehenden Ansprüche, dadurch gekennzeichnet, dass die beiden vorgenannten Schienen (5) auf dem Dach (3) durch Schrauben (19) und durch am Dach (3) vorzugsweise durch Schweissen befestigte Muttern (21) befestigt sind.

11. Vorrichtung nach einem der vorangehenden Ansprüche, dadurch gekennzeichnet, dass Kunststoffprofile (22) zwischen den Schienen (5) und dem Dach (3) eingefügt sind.

12. Vorrichtung nach einem der Ansprüche 1 bis 11, dadurch gekennzeichnet, dass die Halterungen (2) krückenförmig sind.
